Europäisches Patentamt

European Patent Office

Office européen des brevets

(19)

(11) Veröffentlichungsnummer: **0 243 762**
**B1**

# (12) EUROPÄISCHE PATENTSCHRIFT

(45) Veröffentlichungstag der Patentschrift:
**10.05.89**

(51) Int. Cl.⁴: **B60K 20/04**

(21) Anmeldenummer: **87105347.6**

(22) Anmeldetag: **10.04.87**

(54) **Schaltvorrichtung.**

(30) Priorität: **24.04.86 DE 3613854**

(43) Veröffentlichungstag der Anmeldung:
**04.11.87 Patentblatt 87/45**

(45) Bekanntmachung des Hinweises auf die Patenterteilung:
**10.05.89 Patentblatt 89/19**

(84) Benannte Vertragsstaaten:
**DE ES FR GB IT**

(56) Entgegenhaltungen:
**DD-A- 130 225**
**DE-A- 3 334 621**
**DE-B- 2 004 249**
**DE-B- 2 460 769**
**GB-A- 1 086 110**
**US-A- 4 457 188**

(73) Patentinhaber: **AUDI AG, Postfach 220,
D-8070 Ingolstadt(DE)**

(72) Erfinder: **Ott, Dieter, Wassermannstrasse 7,
D-8070 Ingolstadt(DE)**
Erfinder: **Dronia, Christian, Rossinistrasse 37,
D-8070 Ingolstadt(DE)**
Erfinder: **Bieber, Klaus, Dipl.-Ing., Kammühlweg 74 a,
D-8074 Gaimersheim(DE)**
Erfinder: **Maier, Josef, Schönblickstrasse 5,
D-8071 Hepberg(DE)**

(74) Vertreter: **Le Vrang, Klaus, AUDI AG
Postfach 220 Patentabteilung I/EQP,
D-8070 Ingolstadt(DE)**

**Beschreibung**

Die Erfindung betrifft eine Schaltvorrichtung, insbesondere in einem Kraftfahrzeug zum Schalten der Übersetzungen eines Getriebes, gemäß dem Oberbegriff des Patentanspruches 1.

Eine derartige Schaltvorrichtung ist in der DE-C 2 460 769 gezeigt. Dabei sind die den Schwenkwinkel in der einen Ebene definierenden Anschläge am unteren Ende des Schalthebels befestigt. Diese schalthebelseitigen Anschläge wirken mit Gegenanschlägen zusammen, die in einem Schaltdom vorgesehen sind. Daraus ergibt sich, daß beim Schwenken des Schalthebels in der anderen Ebene, d.h. beim Schalten der Übersetzungen, die Anschläge auf einer Kreisbahn verschwenkt werden. Daraus könnte ggf. bei Ausübung einer starken Querkraft während des Schaltens eine gewisse Schwergängigkeit sowie ein Verschleiß zwischen den Anschlägen resultieren. Ferner bedarf es einer großen Sorgfalt bei der Einstellung des Schwenkwinkels in der einen Ebene des Schalthebels (Vorwählebene) relativ zu der mit dem Getriebe verbundenen Schaltstange, bedingt durch die räumliche Trennung der Anschläge von der Gelenkkugelmitte bzw. der Lagerkonsole.

Aufgabe der Erfindung ist es deshalb, eine unter allen Bedingungen leichtgängige, verschleißunempfindlichere und hinsichtlich der Einstellung des Schwenkwinkels des Schalthebels einfachere Schaltvorrichtung der gattungsgemäßen Art zu schaffen.

Diese Aufgabe wird mit den Merkmalen des Patentanspruches 1 gelöst. Erfindungsgemäß sind somit die schalthebelseitigen und die ortsfesten Anschläge im Bereich der Gelenkkugel derart angeordnet, daß sich diese beim Verschwenken des Schalthebels in der einen Ebene (Schaltebene) aufeinander abwälzen. Dies bedeutet, daß während dieses Verschwenkens kein oder nur ein sehr geringer Reibungsanteil entsteht. Dementsprechend ergibt sich eine leichtgängige, verschleißminimierte Schaltvorrichtung. Ferner ist durch die Anordnung der Anschläge unmittelbar im Bereich der Gelenkkugel die Einstellbarkeit des Schwenkwinkels in der Anschlag-Ebene verbessert, weil unter anderem durch Sichtkontakt an den Anschlägen ohne weiteres feststellbar ist, ob der Schwenkwinkel des Schalthebels mit dem konstruktiv vorgesehenen Verdrehwinkel· der Schaltstange im wesentlichen übereinstimmt.

Die schalthebelseitigen Anschläge können in Weiterbildung der Erfindung entsprechend den Merkmalen der Ansprüche 2 und 3 ausgeführt sein. Dadurch ergibt sich eine funktionssichere, herstellungstechnisch günstige Konstruktion. Die Gelenkkugel mit dem angeformten Bügelanschlag kann aus einem verschleißbeständigen, widerstandsfähigen Kunststoffmaterial hergestellt sein.

Gemäß Patentanspruch 4 können die ortsfesten Anschläge durch elastische Pufferplättchen, z.B. aus Kunststoff, gebildet sein, wodurch bei einfacher Herstellbarkeit Anschlagsgeräusche beim Verschwenken des Schalthebels vermieden sind. Die Pufferplättchen können an der Einstellplatte durch eine Clipsverbindung, durch Umbiegen von an der Einstellplatte ausgebildeten Haltezungen oder durch Verkleben befestigt sein.

Die Einstellbarkeit der Schaltvorrichtung in der Anschlag-Ebene (Vorwählebene) kann mit den Merkmalen der Ansprüche 5 und 6 mit geringem Aufwand weiter verbessert werden. Dabei kann nach dem Lockern der Befestigungsmittel die Einstellplatte mit dem Schalthebel verschwenkt werden, wodurch der einzustellende Schwenkwinkel relativ zur Schaltstange besonders einfach herstellbar ist. Dies ist sich so vorzustellen, daß zunächst der Schalthebel soweit möglich in den einen Endanschlag des Schwenkwinkels verstellt und dann nunmehr zur Einstellung in die andere Richtung soweit geschwenkt wird, bis sowohl schaltstangenseitig vom Getriebe her ein Anschlag und schalthebelseitig der Anschlag zwischen Schalthebel und Einstellplatte erreicht sind. Wird in dieser Position die Einstellplatte befestigt, so ist in einfacher Weise sichergestellt, daß der Schwenkwinkel des Schalthebels in der Anschlag-Ebene funktionsgerecht zum Verdrehwinkel der Schaltstange bzw. relativ zu einer Grundplatte festgelegt ist. Die Grundplatte kann entweder ein Abschnitt des Bodenbleches des Kraftfahrzeuges oder eine an dem Bodenblech zu befestigende, separate Grundplatte sein.

Ein Ausführungsbeispiel der Erfindung ist im folgenden näher erläutert. Die schematische Zeichnung zeigt in

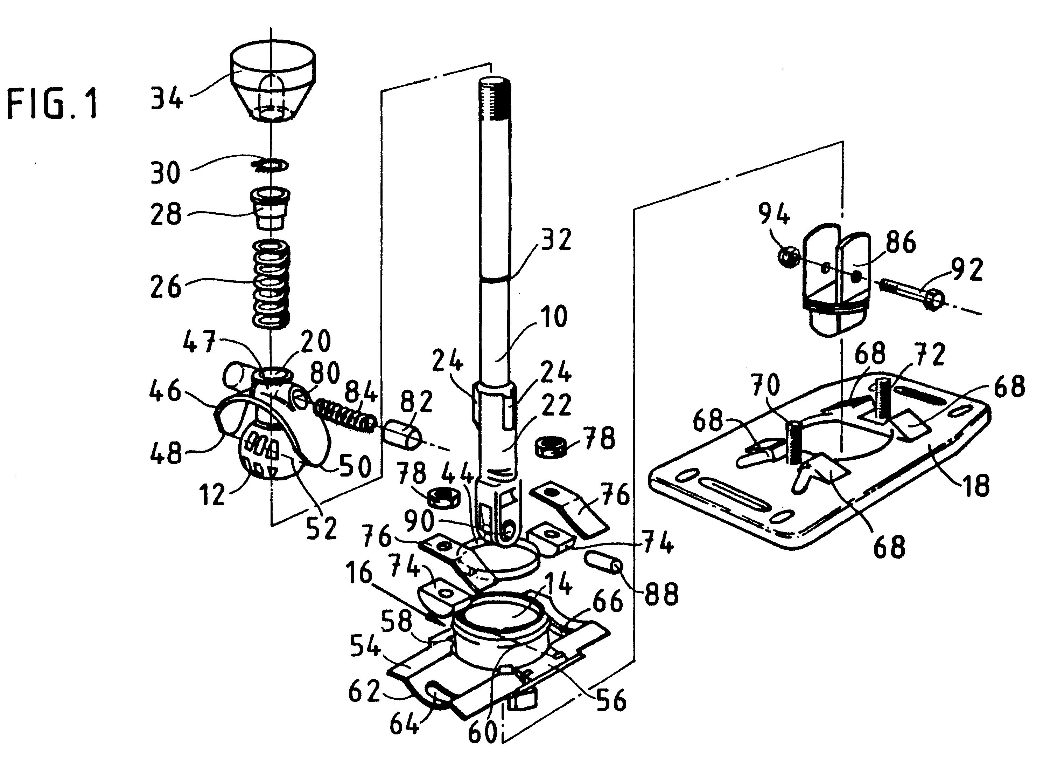

Fig. 1 eine raumbildliche Darstellung der Schaltvorrichtung in demontiertem Zustand,

Fig. 2 eine Ansicht der Schaltvorrichtung senkrecht zu der durch die Anschläge begrenzten Schwenkebene des Schalthebels, und

Fig. 3 einen Teilschnitt durch die Kugelkalotte der die Gelenkkugel aufnehmenden Lagerkonsole der Schaltvorrichtung.

Die dargestellte Schaltvorrichtung zum Schalten der Gänge eines Geschwindigkeits-Wechselgetriebes eines Kraftfahrzeuges setzt sich im wesentlichen aus einem Schalthebel 10, einer Gelenkkugel 12, einer die Gelenkkugel aufnehmenden Kugelkalotte 14 einer Lagerkonsole 16 und einer Grundplatte 18 zusammen. Die Grundplatte 18 kann mittels nicht dargestellter Schrauben an dem Bodenblech eines Kraftfahrzeuges befestigt sein.

Die Gelenkkugel 12 ist mit einer zentralen Bohrung 20 versehen und kann auf einen im Durchmesser größeren Abschnitt 22 des Schalthebels 10 aufgeschoben werden. Auf dem Abschnitt 22 sind axial verlaufende Vorsprünge 24 vorgesehen, die mit korrespondierenden, auf der Zeichnung nicht ersichtlichen Nuten in der zentralen Bohrung 20 der Gelenkkugel 12 eine Verdrehsicherung bilden. Mittels einer Schraubenfeder 26, einer weiteren Führungsbüchse 28 und einem Sicherungsring 30, der in eine Nut 32 des Schalthebels 10 eingreift, ist die Gelenkkugel 12 axial auf dem Schalthebel 10 fixiert. Schließlich ist auf das freie Ende des Schalthebels 10 ein Schaltknopf 34 aufgeschraubt.

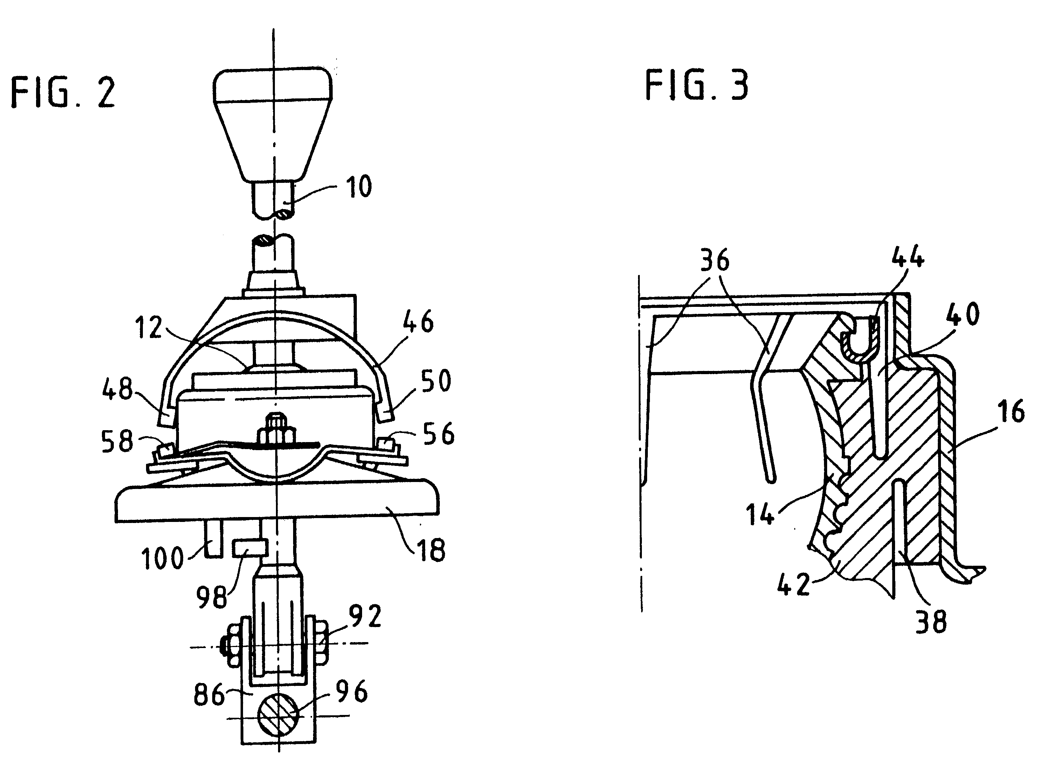

Die Gelenkkugel 10 aus Kunststoff wird in die Kugelkalotte 14 (vgl. Fig. 3) von oben eingedrückt, wozu die Kugelkalotte 14 mit mehreren, ein Auffedern ermöglichenden Schlitzen 36 versehen ist. Die Kugelkalotte 14 ist in ein ringförmiges, mit materialschwächenden Ausnehmungen 38, 40 versehenen Gummilager 42 eingebettet, welches Gummilager 42 andererseits in der Lagerkonsole 16 gehalten ist. Die Verbindung zwischen der Kugelkalotte 14, dem Gummilager 42 und der Lagerkonsole 16 kann durch Vulkanisation hergestellt sein. Ein nach der Montage der Gelenkkugel 12 in die Kugelkalotte 14 eingeclipster, metallischer Federring 44 sichert einen festen, spielfreien Halt der Gelenkkugel 12.

An einem hülsenförmigen Ansatz 47 der Gelenkkugel 12 ist beabstandet zu dieser ein die Gelenkkugel 12 um ca. 180° umfassender Bügelanschlag 46 angeformt, der zwei mit je einer Rundung 48, 50 versehene Anschläge bildet. Diese Anschläge definieren schalthebelseitig den Schwenkwinkel in der einen Schwenkebene (Vorwählebene) des Schalthebels 10. Eine gedachte Verbindungslinie (gestrichelte Linie 52) zwischen diesen Anschlägen 48, 50 verläuft im wesentlichen durch die Mitte der Gelenkkugel 12.

Ferner sind an der an der Lagerkonsole 16 ausgebildeten Einstellplatte 54 beidseitig der Kugelkalotte 14 ortsfeste Anschläge vorgesehen, die durch elastische Pufferplättchen 56, 58 gebildet sind. Eine gedachte Verbindungslinie dieser beiden ortsfesten Anschläge 56, 58 (gestrichelte Linie 60) verläuft im wesentlichen ebenfalls etwa durch die Mitte der Gelenkkugel 12.

Die Einstellplatte 54 ist mit einem zur durch die Anschläge 58, 50 definierten Schwenkebene des Schalthebels 10 senkrecht verlaufenden Krümmungsabschnitt 62 versehen, in dem beiderseits der Kugelkalotte 14 ein in Krümmungsrichtung verlaufendes Langloch 64, 66 eingearbeitet ist. Der Krümmungsabschnitt 62 ist auf an der Grundplatte 18 hochgestellten Rippen 68 abgestützt und wird mittels der die Langlöcher 64, 66 durchragenden Gewindebolzen 70, 72 in Verbindung mit den Klemmstücken 74, Federzungen 76 und Gewindemuttern 78 gehalten. Durch den Krümmungsabschnitt 62 kann die Einstellplatte 54 relativ zur Grundplatte 18 verschwenkt werden, wobei die Schwenkachse in der Mitte der Kugelkalotte 14 bzw. der Gelenkkugel 12 liegt.

Oberhalb des Bügelanschlages 46 ist der hülsenförmige Ansatz 47 noch mit einer Querbohrung 80 versehen, in welchem ein Raststift 82 mit einer Schraubendruckfeder 84 eingesetzt ist. Der Raststift 82, der mit dem einen Vorsprung 24 an dem Schalthebel 10 zusammenwirkt, bildet eine axiale Sicherung zwischen der Gelenkkugel 12 und dem Schalthebel 10, ermöglicht aber andererseits durch Aufbringen einer definierten Kraft senkrecht auf den Schalthebel 10 eine axiale Verschiebung zum Einlegen beispielsweise eines Rückwärtsganges.

An das untere, freie Ende des Schalthebels 10 ist ein U-förmiger Gelenkteil 86 mittels einer das Gelenkteil 86, eine Lagerbüchse 88 in einer Bohrung 90 des Schalthebels durchdringenden Schraube 92 mit einer Schraubenmutter 94 befestigt. An dieses ein Gabelgelenk bildende Gelenkteil 86 ist die nicht näher dargestellte Schaltstange 96 angeschlossen (vgl. Fig. 2), welche Schaltstange mit dem Wechselgetriebe des Kraftfahrzeuges verbunden ist.

Zwischen den Anschlägen 48, 50 des Bügelanschlages 46 und den Anschlägen 56, 58 gebildet durch die Pufferplättchen ist ein bestimmtes Spiel bzw. Abstand vorgesehen, welches den Schwenkwinkel des Schalthebels 10 in der einen Schwenkrichtung bzw. in der Vorwählebene bestimmt. Beispielsweise durch nach links Schwenken des Schalthebels 10 in der Fig. 2 bis zum Anliegen der beiden Anschläge 48, 58 kann der erste und zweite Gang des Geschwindigkeits-Wechselgetriebes geschaltet werden. Die Schaltbewegung liegt dabei in einer Ebene senkrecht zur Vorwählebene. Dabei wälzt sich der mit der Rundung 48 versehene Anschlag aufgrund seiner Position im wesentlichen in der Mitte der Gelenkkugel 12 ohne Reibung auf dem Anschlag 58 bzw. Pufferplättchen 58 ab. In der gezeichneten Mittelstellung zum Schalten des 3. und 4. Ganges, wobei die Mittelstellung durch eine nicht dargestellte, an der Schaltstange 96 angreifende Feder definiert sein kann, ist keiner der Anschläge in Funktion.

Ein Verschwenken des Schalthebels 10 in die entgegengesetzte Endstellung der Vorwählebene ermöglicht ein Schalten des 5. und Rückwärts-Ganges, wobei sich der Anschlag 50 bzw. die Rundung 50 an dem ortsfesten Pufferplättchen 56 abwälzt. Unterhalb der Grundplatte 18 ist an dem Schalthebel 10 ein weiterer Anschlag 98 vorgesehen, der in Zusammenwirken mit einem ortsfesten Anschlag 100 ein Schalten in den Rückwärtsgang nur dann zuläßt, wenn durch axiales Verschieben des Schalthebels 10 relativ zur Gelenkkugel 12 nach unten die beiden Anschläge 98, 100 außer Funktion gesetzt sind.

Soll die gezeigte Schaltvorrichtung bzw. der Schwenkwinkel des Schalthebels 10 in der Vorwählebene eingestellt werden, so werden zunächst die beiden Schraubenmuttern 78 gelockert. Dadurch kann die Einstellplatte 54 relativ zur Grundplatte 18 mit dem Schalthebel 10 verschwenkt werden, wodurch in einfacher Weise der Schwenkwinkel des Schalthebels 10 zum Verdrehwinkel der Schaltwelle 96 eingestellt werden kann. Die Federzungen 76 dienen dabei der Erleichterung der Einstellung, indem sie nach dem Lockern der Schraubenmuttern 78 die Einstellplatte 54 in eine die beiden Anschläge 48, 58 in Kontakt haltende Position vorspannen.

Es versteht sich, daß sowohl unterhalb der Grundplatte 18 als auch oberhalb dieser jeweils eine die Schaltvorrichtung abdeckende Schutzmanschette vorgesehen ist. Die an dem Bügelanschlag 46 vorgesehenen Rundungen könnten auch an den ortsfesten Anschlägen 56, 58 vorgesehen sein, während dann der Bügelanschlag 46 mit planen Anschlagflächen ausgeführt wäre.

**Patentansprüche**

1. Schaltvorrichtung, insbesondere in einem Kraftfahrzeug zum Schalten der Übersetzungen eines Getriebes, mit einer Lagerkonsole mit einer Kugelkalotte, in der eine an einem in zwei Ebenen schwenkbaren Schalthebel angeordnete Gelenkkugel aufgenommen ist, wobei an dem Schalthebel zwei Anschläge zur Begrenzung dessen Schwenkwinkels in der einen Ebene angeordnet sind, welche Anschläge mit ortsfesten Anschlägen zusammenwirken, dadurch gekennzeichnet, daß die schalthebelseitigen und die ortsfesten Anschläge (48, 50 bzw. 56, 58) im Bereich der Gelenkkugel (12) angeordnet sind, wobei deren gedachte Verbindungslinien (52, 60) jeweils den Gelenkkugel-Mittenbereich durchstoßen, und daß das eine Anschlagpaar (48, 50) mit je einer Rundung zum Abwälzen auf dem anderen Anschlagspaar (56, 58) versehen ist.

2. Schaltvorrichtung nach Anspruch 1, dadurch gekennzeichnet, daß das schalthebelseitige Anschlagspaar (48, 50) ein beabstandet die Gelenkkugel (12) um ca. 180° umschließender Bügelanschlag (46) ist, dessen Enden mit Rundungen (48, 50) versehen sind.

3. Schaltvorrichtung nach Anspruch 2, dadurch gekennzeichnet, daß der Bügelanschlag (46) an einem hülsenförmigen Ansatz (47) der Gelenkkugel (12) angeformt ist.

4. Schaltvorrichtung nach Anspruch 1, dadurch gekennzeichnet, daß die ortsfesten Anschläge durch an einer Einstellplatte (54) der Lagerkonsole (16) angeordnete, elastische Pufferplättchen (56, 58) gebildet sind.

5. Schaltvorrichtung nach Anspruch 1, dadurch gekennzeichnet, daß eine Einstellplatte (54) der Lagerkonsole (16) verschwenkbar in der einen Schwenkebene (Vorwählebene) des Schalthebels (10) befestigt ist.

6. Schaltvorrichtung nach Anspruch 5, dadurch gekennzeichnet, daß die Einstellplatte (54) im Befestigungsbereich auf einer die Lagerkonsole (16) haltenden Grundplatte (18) mit einem Krümmungsabschnitt (62) versehen ist, dessen Mittelachse im wesentlichen in der Mitte der Gelenkkugel (12) liegt und daß die Einstellplatte (54) durch Verschieben um die Krümmungsmittelachse eine Einstellung des durch die Anschläge (48, 50) bzw. (56, 58) festgelegten Schwenkwinkels relativ zur Grundplatte (18) ermöglicht.

## Revendications

1. Dispositif de commutation, en particulier dans un véhicule automobile pour le changement des rapports d'une boîte de vitesses, comportant une console de support munie d'une calotte sphérique dans laquelle est reçue une bille d'articulation disposée sur un levier de vitesses oscillant dans deux plans, deux butées étant disposées sur le levier de vitesses pour limiter l'angle de pivotement de celui-ci, butées qui coopèrent avec des butées fixes, caractérisé en ce que les butées (48, 50) solidaires du levier de vitesses et les butées fixes (56, 58) sont disposées dans la région de la bille d'articulation (12), leurs lignes imaginaires de jonction respectives (52, 60) passant par la région centrale de la bille d'articulation, et en ce que les butées (48, 50) de l'une des paires sont munies chacune d'un arrondi pour rouler sur les butées (56, 58) de l'autre paire.

2. Dispositif de commutation selon la revendication 1, caractérisé en ce que la paire de butées (48, 50) solidaires du levier de vitesses est une butée en étrier (46) qui entoure à distance la bille d'articulation (12) sur 180° environ et dont les extrémités sont munies d'arrondis (48, 50).

3. Dispositif de coommutation selon la revendication 2, caractérisé en ce que la butée en étrier (46) est formée sur un appendice en forme de douille (47) de la bille d'articulation (12).

4. Dispositif de commutation selon la revendication 1, caractérisé en ce que les butées fixes sont constituées par des plaquettes-tampons élastiques (56, 58) disposées sur une plaque de réglage (54) de la console de support (16).

5. Dispositif de commutation selon la revendication 1, caractérisé en ce qu'une plaque de réglage (54) de la console de support (16) est fixée de manière à pouvoir pivoter dans l'un des plans d'oscillation (plan de présélection) du levier de vitesses (10).

6. Dispositif de commutation selon la revendication 5, caractérisé en ce que la plaque de réglage (54) est munie, dans la région de sa fixation sur une plaque de base (18) qui maintient la console de support (16), d'une section courbe (62) dont l'axe est situé pratiquement au milieu de la bille d'articulation (12), et en ce que la plaque de réglage (54) rend possible, par déplacement autour de l'axe de cette section courbe, un réglage de l'angle de pivotement, fixé par les butées (48, 50 ou 56, 58), par rapport à la plaque de base (18).

## Claims

1. Selection device, in particular for selecting the gearing of a gear system in a motor vehicle, with a support bracket with a spherical socket segment in which is held a ball of a universal joint on a gearshift lever which can be traversed in two planes, two stops being positioned on the gearshift lever for limiting its traverse angle in one of the planes, which stops operate in conjunction with fixed stops, characterized in that the stops on the gearshift lever side and the fixed stops (48, 50 and 56, 58 respectively) are positioned in the region of the ball (12) of the universal joint and their imaginary connecting lines (52, 60) each pass through the central region of the ball of the universal joint and in that one of the pairs of stops (48, 50) is provided with a curve for each stop for rolling on the other pair of stops (56, 58).

2. Selection device according to Claim 1, characterized in that the pair of stops (48, 50) on the gearshift lever side is provided with a curved stop (46) which surrounds the ball (12) of the universal joint by approximately 180° at a distance from it, its ends being provided with curves (48, 50).

3. Selection device according to Claim 2, characterized in that the curved stop (46) is formed on a sleeve-shaped extension (47) of the ball (12) of the universal joint.

4. Selection device according to Claim 1, characterized in that the fixed stops are formed by small elastic buffer plates (56, 58) positioned on an adjusting plate (54) of the support bracket (16).

5. Selection device according to Claim 1, characterized in that the adjusting plate (54) of the support bracket (16) is secured so that it can be traversed in one of the traverse planes (preselection plane) of the gearshift lever (10).

6. Selection device according to Claim 5, characterized in that in the region in which it is secured to a base plate (18) holding the support bracket (16) the adjusting plate (54) is provided with a curved section (62) the central axis of which lies essentially in the centre of the ball (12) of the universal joint and in that, by displacing it about its central axis of curvature, the adjusting plate (54) enables the traverse angle determined by the stops (48, 50) and (56, 58) to be adjusted relative to the base plate (18).

FIG.1

FIG. 2

FIG. 3

EP 0 243 762 B1